# EUROPEAN PATENT SPECIFICATION

(11) **EP 0 700 104 B1**
(45) Date of publication and mention of the grant of the patent: **14.01.1998**
(21) Application number: 95202674.8
(22) Date of filing: 11.06.1992
(51) Int. Cl.: H01M 4/12, H01M 6/06, H01M 4/62

(54) **Alkaline battery**
Alkalische Batterie
Pile alcaline

(30) Priority: 11.06.1991 JP 165178/91; 31.10.1991 JP 311432/91
(43) Date of publication of application: 06.03.1996
(62) Divisional of application: 92305348.2
(73) Proprietor: Fuji Electrochemical Co., Ltd, Minato-ku, Tokyo (JP)
(72) Inventor: Shinoda, Kenichi, Toyohashi-shi, Aichi (JP); Izumi, Akihide, Kosai-shi, Sizuoka (JP); Murakoshi, Mitsuo, Hamana-gun, Sizouka (JP); Tsutsui, Kiyohide, Sizouka (JP); Yamashita, Katsuhiro, Toyohashi-shi, Aichi (JP)
(74) Representative: Charlton, Peter John

(56) References cited:
- FR-A- 2 634 597
- DATABASE WPI Derwent Publications Ltd., London, GB; AN 77-31418Y & JP-A-50 096 844 (MATSUSHITA)
- DATABASE WPI Derwent Publications Ltd., London, GB; AN 76-00858X & JP-A-50 067 427
- PATENT ABSTRACTS OF JAPAN vol. 13, no. 346 (E-798) 3 August 1989 & JP-A-01 105 466 (FUJI)
- PATENT ABSTRACTS OF JAPAN vol. 9, no. 47 (E-299) 27 February 1985 & JP-A-59 186 256 (MATSUSHITA)

## Description

The present invention relates to a mercury eliminated alkaline battery. More specifically, the invention relates to an alkaline battery, which has high vibration strength and impact resistance, and can eliminate degradation of discharge ability under heavy load and low temperature.

In the conventional alkaline battery, a small amount of mercury is used for forming amalgam for increasing corrosion resistance by elevating hydrogen overvoltage of zinc used as primary active material for negative electrode or cathode, and for restricting passivation of zinc by converting into zinc oxide.

However, since mercury is harmful substance, there have been progressed attempts for avoiding mercury in the recent years. French Patent No. 2 634 597 discloses an alkaline battery comprising a negative electrode prepared from zinc powder, conductive fibres and a gel electrolyte. The conductive fibres consist preferably of a metal coated in zinc, cadmium or indium and are used in the negative electrode as a replacement for mercury, offering a similar performance to batteries where zinc is amalgamated to 5%.

As is well known, gel form negative electrodes are employed as the negative electrodes for the conventional akaline battery. The gel form negative electrode is typically formed by mixing and kneading zinc powder, alkaline electrolyte and a gelling agent. The gelling agent is added for maintaining the zinc powder in uniformly distributed gel form, for increasing contacting surface area of the zinc powder and for improving reaction effeciency.

As the gelling agent, powder form gelling agent and granular gelling agent which can hold the electrolyte are typically used. The powder form gelling agent is typically carboxymethyl cellulose (CMC), poly acrylate or salts thereof. On the other hand, the granular gelling agent is typically, cross-linking and branching type poly (meta) acrylate or salts thereof as solely used or the gelling agent containing the same as primary component.

However, in case of the gel form negative electrode using the powder state gelling agent, the gel form electrolyte forming the gel form negative electrode can cause flowing in response to strong impact, such as that applied by falling down to cause destroying uniformity of distribution of zinc powder and to cause local concentration of the zinc powder. This degrades contacting condition between zinc powder particles or between zinc powder and the negative collector and thus results in lowering of performance of the battery. In the prior art, a small amount of mercury has been used for avoiding such problem. However, in the ecological viewpoint, it is highly desirable to avoid mercury.

On the other hand, in case of the granular gelling agent, the granular gelling agent swells by absorbing electrolyte and fills the gap between zinc powder particles to restrict movement of the zinc powder particles upon exertion of vibration or impact. This is effective for preventing the battery from lowering the performance due to lowering of uniformity of zinc distribution. On the other hand, even when discharging of battery is processed, the electrolyte absorbed in the granular gelling agent tends to be held therein. This creates a problem in that, degradation of heavy load discharge performance and low temperature discharge performance cannot be satisfactorily eliminated.

In order to solve the problems set forth above, various attempts, such as the use of powder state gelling agent and the granular gelling agent in combination or so forth, have been made. However, no attempt has successfully achieved satisfactory improvement.

An object of the present invention is to provide an alkaline battery which has high vibration strength and impact resistance, and can hold high performance even under heavy load and low temperature condition.

In order to accomplish the above-mentioned object, there is provided an alkaline battery comprising a positive electrode and a gel form negative electrode avoiding mercury and containing a zinc or zinc alloy powder and a fiber material mixed with an alkaline electrolyte, said fiber material being at least one fiber material selected among rayon, vinylon, acryl, vinyon, polyamide, polypropylene, polyethylene, mercerized pulp, linter pulp.

The above-mentioned negative electrode is formed by dry mixing one or more oxide or hydroxide of indium, lead, gallium, bismuth, with zinc or zinc alloy powder to form a dry mixture, putting the dry mixture thus formed into a gelatinized alkaline electrolyte, and stirring and dispersing the mixture in the gelatinized alkaline electrolyte.

Alternatively, negative electrode could be formed by dry mixing one or more oxide or hydroxide of the above-mentioned metals, zinc or zinc alloy powder, and powder state gelling agent to form a mixture, putting the mixture into an electrolyte, and then mixing and dispersing the mixture in the electrolyte.

A fiber material is then added to the gel form negative electrode of the alkaline battery.

According to the present invention, since the fiber material is added to the gel form negative electrode containing the electrolyte, the gelling agent and the zinc or zinc alloy powder, the zinc or zinc alloy powder particles are caused in the three dimensionally aggregating fiber material and maintained with restricting its motion.

Also, since the fiber material swells by absorbing the electrolyte and increasing tightness of contact between the zinc or zinc alloy powder with the negative pole collector, rising of internal resistance can be eliminated.

In addition, the electrolyte absorbed in the fiber material may flow out by a given amount according to progress of discharging so that discharge characteristics can be stabilized.

Since an alkali-proof fiber is employed, the fiber may maintain its characteristics for a long period to stably provide the foregoing effect for long period.

With the alkaline battery according to the present invention, since the fiber material is added for the gel form negative electrode containing alkaline electrolyte, gelling agent and zinc or zinc alloy powder, the zinc or zinc alloy powder may be caught within the three dimensionally aggregating and maintained therein, the vibration or impact exerted on the battery can be absorbed by the fiber and motion of the zinc or zinc alloy powder particles can be restricted. This provides improvement in vibration strength and impact resistance of the negative electrode for the akaline battery.

Other objects and advantages of the present invention will become clear from the further detailed description given herebelow in terms of the preferred embodiment of the present invention.

The present invention will be understood more fully from the detailed description given herebelow and from the accompanying drawings illustrating the preferred embodiment of the invention, which, however, should not be taken to be limitative to the invention, but are for explanation and understanding only.

In the drawings:

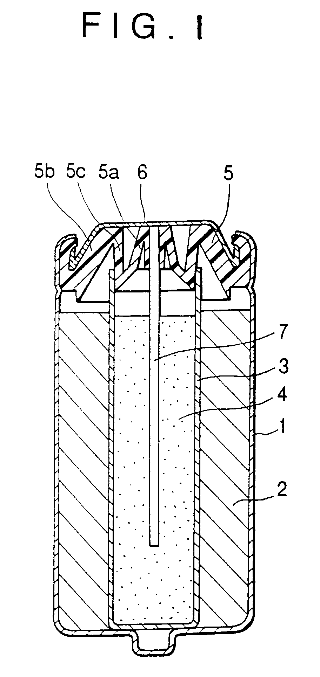

**Fig. 1** is a cross section showing construction of a cylindrical alkaline battery.

Preferred embodiments of the present invention with comparative examples will be discussed herebelow. The composition ratio of the basic materials forming the gel form negative electrode is the same for all of the embodiments and the comparative examples. It should be noted that though the following discussion will be given in terms of the gel form negative electrode, the present invention is equally applicable for any other compositions of the negative electrodes for the alkaline battery.

Also, in the comparative examples, pure indium is selected as a material of the effective metal to be added, which is known as relatively highly effective in non-mercury battery. However, various metallic materials to form the effective metal are obvious to those skilled in the art. For instance, oxide or hydroxide of lead, gallium, bismuth can be solely or in combination suitable material for forming the effective metal to be added.

**Fig. 1** shows a cross section of a cylindrical alkaline battery. As seen, the shown construction of the cylindrical alkaline battery includes a cylindrical positive pole can **1**. A positive pole composition **2** composed of manganese dioxide and graphite, a separator **3** and a gel form negative electrode **4** are arranged in the positive pole can **1** in order in coaxial arrangement.

A negative pole terminal plate **6** is arranged in an opening portion of the positive pole can **1** via an electrically insulative seal gasket **5**. The edge portion of the positive pole can **1** is clamped inwardly so that the outer circumference of the seal gasket **5** is clamped between the clamped edge of the opening portion and the outer circumferential portion of the negative pole terminal plate **6** in leak-proofing fashion. The seal gasket **5** includes a central boss portion **5a**, an outer circumferential portion **5b** and a connecting portion **5c** interpositioned between the central boss portion and the outer circumferential portion.

On the inner center portion of the negative pole terminal plate, a negative pole collector **7** is fixed by spot welding. The negative pole collector **7** extends through a center opening defined through the central boss portion **5a** of the seal gasket **5**. Furthermore, for the central boss section **5a**, a seal cap **8** is fitted from the inside of the battery.

When mercury is avoided from the negative electrode **4**, the conventionally known brass or other pure metal can be employed as the negative pole collector **7**. Preferably, plating of solder, tin, indium or so forth is provided on the surface of the metal collector so as to further restrict generation of hydrogen from the zinc powder or zinc alloy powder.

As the seal cap **8** for the alkaline battery, in which mercury is avoided from the gel form negative electrode **4**, if the conventional seal cap which is formed by punch forming from a tin plated steel plate, the flush formed through punching process and exposing the elemental iron may promote generation of the hydrogen gas to degrade leak-proof capability of the battery.

Accordingly, it is preferred to form the seal cap **8** of a brass for restricting generation amount of the hydrogen gas. In this case, if degree of amalgamation is relatively high, such as greater than or equal to 0.6 Wt%, dispersion of mercury may be caused along crystal interface to lower the toughness of the seal cap to easily cause crack or to make it difficult to maintain necessary seal strength. However, according to the present invention, since mercury can be completely avoided, such problem will never be caused.

By experimentally producing LR6 type alkaline battery having the gel form negative electrode **4** similar to the conventional one and the batteries including gel form negative electrodes, to which variety of fibers were added, performance test was performed. There followings are the particulars of respective of the batteries subject to the performance test.

### [PRIOR ART 1]

The gel form negative electrode was prepared by solving ZnO in 40 Wt% KOH solution in the saturated condition, adding powder state gelling agent (powder state polyacrylate) for preparing gel form alkaline electrolyte, and adding zinc powder 60 Wt% to 40 Wt% of gel form alkaline electrolyte.

### [PRIOR ART 2]

The gel form negative electrode was prepared by replacing the powder state gelling agent in the prior art example 1 with a mixture of powder state polyacrylate 50 Wt% and granular polyacrylate 50 Wt%.

### [SAMPLE 1]

The gel form negative electrode was prepared by adding rayon fiber 2 Wt% relative to the weight of the zinc powder in the prior art example 1.

### [SAMPLE 2]

The gel form negative electrode was prepared by adding mercerized pulp 2 Wt% relative to the weight of the zinc powder in the prior art example 1.

### [SAMPLE 3]

The gel form negative electrode was prepared by adding vinylon fiber 2 Wt% relative to the weight of the zinc powder in the prior art example 1.

### [SAMPLE 4]

The gel form negative electrode was prepared by adding acryl fiber 2 Wt% relative to the weight of the zinc powder in the prior art example 1.

It should be noted that, in the foregoing samples 1 to 4, the fiber materials were approximately 4 mm in the length and 0.5 to 1 denier.

Using LR6 type cylindrical alkaline batteries containing the above-mentioned 6 kinds of the gel form negative electrodes, (A) vibration test and (B) discharging performance test under heavy load and low temperature were performed.

### (A) Vibration Test

By setting magnitude of vibration at 1.5 mm, and varying vibration frequency for increasing from initial 10 Hz to 55 Hz in a rate of 1 Hz/min, and then decreasing to 10 Hz in the same rate, shorting current was measured and compared with an initial value.

### (B) Heavy Load and Low Temperature Discharging Performance Test

At environmental temperature of 20°C, and with a load resistance of 2Ω, an elapsed time in continuous discharge up to final voltage (E. P. V.) of 0.9V was measured and compared with an initial value. Also, at environmental temperature of -10°C, and with a load resistance of 10Ω, the discharge period up to the final voltage, i.e. 0.9V was measured. It should be noted that the tests were performed after storing the sample batteries for 20 days under 60°C (accelerating condition substantially corresponding to 1 year storage at normal temperature).

The following tables 1 and 2 shows the results of the tests. The results of the test (A) are shown as percentage of magnitude of shorting current with respect to the initial shorting current. The results of the test (B) are shown as percentage of the discharge period to reach the final voltage after storing with respect to the initial discharging period.

**TABLE 1**

| Vibration Test (%) | | | | | | |
|---|---|---|---|---|---|---|
| Sample Battery | Sample 1 | Sample 2 | Sample 3 | Sample 4 | Prior Art 1 | Prior Art 2 |
| | 87 | 86 | 94 | 82 | 75 | 88 |

**TABLE 2**

| Heavy Load and Low Temperature Discharge Performance Test (%) | | | | | | |
|---|---|---|---|---|---|---|
| 1. Heavy Load Performance Test (2Ω Continuous Discharge, EPV = 0.9V, 20 °C) | | | | | | |
| Sample Battery | Sample 1 | Sample 2 | Sample 3 | Sample 4 | Prior Art 1 | Prior Art 2 |
| | 93 | 89 | 88 | 96 | 82 | 85 |

| 2. Heavy Load and Low Temperature Performance Test (10Ω Continuous Discharge, EPV = 0.9V, -10 °C) | | | | | | |
|---|---|---|---|---|---|---|
| Sample Battery | Sample 1 | Sample 2 | Sample 3 | Sample 4 | Prior Art 1 | Prior Art 2 |
| | 95 | 96 | 93 | 98 | 89 | 92 |

### (A) Results of Vibration Test

All of the samples 1 to 4 exhibit better results than that of the prior art example 1, in which only powder state gelling agent was used. Particularly, the sample 3, in which vinylon fiber was added, better results was obtained than the prior art example 2, in which the powder state gelling agent and granular gelling agent were used in combination. From this, it should be understood that addition of soft fiber material having high impact absorbing ability is particularly effective in terms of vibration strength and impact resistance.

On the other hand, in addition to this test, discharge test was performed by connecting LR20 type alkaline battery to 1Ω of load resistance. And the batteries were fell onto an iron plate from the height of 10 cm for five times. Then, terminal voltage at both ends of the load resistor was measured. This test was performed with respect to (a) no mercury is added, (b) 250 ppm of mercury is added (amalgamation degree of 1.5 Wt%, similar to those in the market) and (c) no mercury is added and vinylon fiber is added. The results were compared. In this results, in case of the battery, to which no mercury is added, the terminal voltage was abruptly dropped upon falling impact. After recovery, certain magnitude of offset relative to the initial voltage was maintained. In contrast, in case of the battery to which 2.0 Wt% of vinylon fiber was added, only a little variation of the terminal voltage was observed upon falling impact, and the voltage was instantly recovered to the initial voltage. This is substantially the equivalent performance to the presently available battery containing 250 ppm of mercury.

### (B) Results of Heavy Load and Low Temperature Discharge Performance Test

With respect to either condition of heavy load condition of 20 °C, 2Ω continuous discharge and heavy load and low temperature condition of -10 °C, 10Ω continuous discharge, the samples 1 to 4 exhibited better performance beyond the prior art example 1 and equivalent to the performance of the prior art example 2. Particularly, the sample 4, in which the acryl fiber is added, demonstrated remarkable improvement of the performance.

As discussed in detail hereabove, by adding fiber to the gel form negative electrode of the cylindrical alkaline battery, equivalent vibration strength and impact resistance to those now available can be obtained even when mercury is avoided. Furthermore, degradation of heavy load and low temperature discharge performance after storing can be reduced to certainly maintain the equivalent performance to the conventional batteries containing mercury.

It should be noted that although the foregoing discussion has been concentrated for the cylindrical battery, the present invention is equally applicable for variety of configurations or structures of alkaline batteries.

Although the invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments within the scope of the appended claims.

## Claims

1. An alkaline battery comprising a positive electrode and a gel form negative electrode avoiding mercury and containing a zinc or zinc alloy powder and a fiber material mixed with an alkaline electrolyte, said fiber material being at least one fiber material selected among rayon, vinylon, acryl, vinyon, polyamide, polypropylene, polyethylene, mercerized pulp, linter pulp.

2. An alkaline battery as set forth in claim 1, which further comprises a positive pole container member with a closure cap for sealingly closing said container member and a negative pole collector, in which said closure cap and said negative pole collector are formed of brass.

3. An alkaline battery as set forth in claim 2, wherein said closure cap and said negative pole collector are formed of solder plated brass material.

4. An alkaline battery as set forth in claim 1, wherein said gel form negative electrode is formed through the steps of:
preparing a dry mixture of one or more of oxide or hydroxide of indium, lead, gallium and bismuth and a zinc or zinc alloy powder through dry mixing;
putting said dry mixture into a gel form alkaline electrolyte; and
mixing and dispersing the dry mixture in the gel form electrolyte.

5. An alkaline battery as set forth in claim 1, wherein said gel form negative electrode is formed through the steps of:
preparing a gel form alkaline electrolyte by mixing potassium hydroxide electrolyte and polyacrylic acid;
preparing a dry mixture of a zinc or zinc alloy powder and indium oxide by dry mixing;
putting said dry mixture to said gel form alkaline electrolyte; and
stirring said alkaline electrolyte with said dry mixture for a predetermined period of time for mixing and dispersing said dry mixture.

6. An alkaline battery as set forth in claim 1, wherein said gel form negative electrode is formed through the steps of:
preparing a dry mixture of a zinc or zinc alloy powder and indium oxide and polyacrylic acid by dry mixing;
putting said dry mixture to said potassium hydroxide electrolyte; and
stirring said potassium hydroxide electrolyte with said dry mixture for a predetermined period of time for mixing and dispersing said dry mixture.

## Patentansprüche

1. Alkalische Batterie mit einer positiven Elektrode und einer gelförmigen negativen Elektrode unter Vermeidung von Quecksilber und enthaltend Zink oder ein Zinklegierungspulver und ein Fasermaterial, gemischt mit einem alkalischen Elektrolyten, wobei es sich bei dem Fasermaterial um wenigstens ein Fasermaterial handelt, das ausgewählt ist aus Rayon, Vinylon, Acryl, Vinyon, Polyamid, Polypropylen, Polyethylen, merzerisierter Pulpe, Linterpulpe.

2. Alkalische Batterie nach Anspruch 1, außerdem aufweisend ein Positiv-Pol-Behälterelement mit einer Verschlußkappe zum dichten Verschließen des Behälterelements und einen Negativ-Pol-Kollektor, wobei die Verschlußkappe und der Negativ-Pol-Kollektor aus Messing gebildet sind.

3. Alkalische Batterie nach Anspruch 2, wobei die Verschlußkappe und der Negativ-Pol-Kollektor aus einem Lötmittelplattierten Messingmaterial bestehen.

4. Alkalische Batterie nach Anspruch 1, wobei die gelförmige negative Elektrode gebildet ist durch die Schritte:
Bereitstellen eines trockenen Gemisches aus entweder Oxid oder Hydroxid von Indium, Blei, Gallium und Wismuth, und einem Zink oder Zinklegierungspulver durch Trockenmischen oder von mehreren dieser Bestandteile,
Überführen der Trockenmischung in einen gelförmigen alkalischen Elektrolyten, und
Mischen und Dispergieren der Trockenmischung in den gelförmigen Elektrolyten.

5. Alkalische Batterie nach Anspruch 1, wobei die gelförmige negative Elektrode durch die folgenden Schritte gebildet ist:
Bereitstellen eines gelförmigen alkalischen Elektrolyten durch Mischen von Kaliumhydroxid-Elektrolyt und Polyacrylsäure,
Bereitstellen einer Trockenmischung aus Zink oder einem Zinklegierungspulver und Indiumoxid durch Trockenmischen, Zusetzen der Trockenmischung zu dem gelförmigen alkalischen Elektrolyten, und
Rühren des alkalischen Elektrolyten mit der Trockenmischung für eine vorbestimmte Zeitperiode zum Mischen und Dispergieren der Trockenmischung.

6. Alkalische Batterie nach Anspruch 1, wobei die gelförmige negative Elektrode durch die Schritte gebildet ist:
Bereitstellen einer Trockenmischung aus Zink oder Zinklegierungspulver und Indiumoxid und Polyacrylsäure durch Trockenmischen,
Zusetzen der Trockenmischung zu dem Kaliumhydroxid-Elektrolyten, und
Rühren des Kaliumhydroxid-Elektrolyten mit der Trockenmischung für eine vorbestimmte Zeitperiode zum Mischen und Dispergieren der Trockenmischung.

## Revendications

1. Pile alcaline comprenant une électrode positive et une électrode négative sous forme de gel évitant le mercure et contenant une poudre de zinc ou d'alliage de zinc et un matériau fibreux mélangé à un électrolyte alcalin, ledit matériau fibreux étant au moins un matériau fibreux choisi entre la rayonne, le vinylon, l'acryle, le vinyon, le polyamide, le polypropylène, le polyéthylène, la pulpe mercerisée, la pulpe à bourres.

2. Pile alcaline selon la revendication 1, qui comprend en outre un élément conteneur du pôle positif avec un capuchon de fermeture pour fermer hermétiquement ledit élément conteneur et un collecteur de pôle négatif, dans laquelle ledit capuchon de fermeture et ledit collecteur de pôle négatif sont réalisés en laiton.

3. Pile alcaline selon la revendication 2, dans laquelle ledit capuchon de fermeture et ledit collecteur de pôle négatif sont réalisés en laiton plaqué de soudure.

4. Pile alcaline selon la revendication 1, dans laquelle ladite électrode négative sous forme de gel est réalisée par les étapes de :
préparation d'un mélange sec d'un ou plusieurs oxydes ou hydroxydes d'indium, de plomb, de gallium et de bismuth et d'une poudre de zinc ou d'alliage de zinc par mélange à sec;
mise dudit mélange sec dans un électrolyte alcalin sous forme de gel; et
mélange et dispersion du mélange sec dans l'électrolyte sous forme de gel.

5. Pile alcaline selon la revendication 1, dans laquelle ladite électrode négative sous forme de gel est réalisée par les étapes de :
préparation d'un électrolyte alcalin sous forme de gel par mélange d'un électrolyte d'hydroxyde de potassium et d'acide polyacrylique;
préparation d'un mélange sec d'une poudre de zinc ou d'alliage de zinc et d'oxyde d'indium par mélange à sec;
mise dudit mélange sec dans ledit électrolyte alcalin sous forme de gel; et
agitation dudit électrolyte alcalin avec ledit mélange sec pendant une durée prédéterminée pour mélanger et disperser ledit mélange sec.

6. Pile alcaline selon la revendication 1, dans laquelle ladite électrode négative sous forme de gel est réalisée par les étapes de :
préparation d'un mélange sec d'une poudre de zinc ou d'alliage de zinc et d'oxyde d'indium et d'acide polyacrylique par mélange à sec;
mise dudit mélange sec dans ledit électrolyte d'hydroxyde de potassium; et
agitation dudit électrolyte d'hydroxyde de potassium avec ledit mélange sec pendant une durée prédéterminée pour mélanger et disperser ledit mélange sec.
